Europäisches Patentamt

European Patent Office

Office européen des brevets

(19)

(11) Veröffentlichungsnummer: **0 245 824**

**A1**

(12) **EUROPÄISCHE PATENTANMELDUNG**

(21) Anmeldenummer: **87106821.9**

(22) Anmeldetag: **11.05.87**

(51) Int. Cl.⁴: **A01D 34/66** , A01D 34/74

(30) Priorität: **13.05.86 US 862862**

(43) Veröffentlichungstag der Anmeldung:
**19.11.87 Patentblatt 87/47**

(84) Benannte Vertragsstaaten:
**DE FR GB SE**

(71) Anmelder: **DEERE & COMPANY**
**1 John Deere Road**
**Moline Illinois 61265(US)**

(72) Erfinder: **Oxley, Lonnie R.**
**630 Elm Street**
**West Bend Wisconsin 53095(US)**

(74) Vertreter: **Feldmann, Bernhard et al**
**DEERE & COMPANY European Office, Patent**
**Department Steubenstrasse 36-42 Postfach**
**503**
**D-6800 Mannheim 1(DE)**

(54) Vorrichtung zur Verstellung einer Mähwerksvorrichtung.

(57) Eine Vorrichtung zur Verstellung einer an die Stirnseite eines Schleppers (10) angeschlossenen Mähwerksvorrichtung ist mit einem höhenverstellbaren Rahmen (40) ausgerüstet, der sich einenends über Laufräder (46) abstützt, anderenends über Gelenkbolzen (20) an am Schlepper (10) schwenkbar angeschlossenen Tragarmen (16) abstützt. Die Mähwerksvorrichtung ist ebenfalls einenends auf Laufrädern (46), anderenends an den Gelenkbolzen (20) und somit an den Rahmen (40) - schwenkbar angeschlossen.

Fig. 2

EP 0 245 824 A1

## Vorrichtung zur Verstellung einer Mähwerksvorrichtung

Die Erfindung bezieht sich auf eine Vorrichtung zur Verstellung einer an die Stirnseite eines Schleppers angeschlossenen Mähwerksvorrichtung, die sich über Laufräder am Schlepper abstützt.

Es ist bereits allgemein bekannt, Schlepper mit einem Mähwerk auszurüsten, das hierzu über Lenker an die Stirnseite des Schleppers höhenverstellbar angeschlossen ist und sich an seinem vorderen Ende über Laufräder auf dem Boden abstützt. Die Vorrichtung zur Höhenverstellung des Mähwerkes ist jedoch bei der bekannten Vorrichtung sehr aufwendig, teuer und kompliziert zu handhaben.

Dem gegenüber liegt der Erfindung die Aufgabe zugrunde, die Vorrichtung zur Verstellung der Mähwerksvorrichtung derart auszubilden und anzuordnen, daß mit baulich einfachen Mitteln eine einfache Verstellung der Mähwerksvorrichtung in kürzester Zeit herbeigeführt werden kann. Diese Aufgabe ist dadurch gelöst worden, daß die Mähwerksvorrichtung an einem Tragrahmen gelenkig angeschlossen ist, wobei die Gelenkstelle des Tragrahmens auch die gelenkige Anschlußstelle des Tragarmes an der Mähwerksvorrichtung ist, und daß der Tragrahmen sich mittels seines vorderen Endes über Laufräder auf dem Boden abstützt, wobei der Tragrahmen ferner im vorderen Bereich für unterschiedliche Höheneinstellungen eine Stellvorrichtung aufweist und im hinteren Bereich über eine Zugseilvorrichtung mit der Mähwerksvorrichtung bzw. deren Tragarme verbunden ist. Durch die vorteilhafte Anordnung des Tragarmes, der zur Aufnahme der Mähwerksvorrichtung dient, läßt sich eine einwandfreie Verstellung der Mähwerksvorrichtung zwischen verschiedenen Arbeitspositionen erreichen. Durch die vorteilhafte Anlenkung der Mähwerksvorrichtung an den Tragarmen sowie an den einzelnen Tragarmen läßt sich auch eine Parallelverstellung der Mähwerksvorrichtung mit Bezug auf die Standfläche des Schleppers erreichen. Hierzu ist es vorteilhaft, daß die Zugseilvorrichtung eine an der Mähwerksvorrichtung angeordnete Umlenkrolle aufweist, und daß das um die Umlenkrolle geführte Kabel einenends am Tragrahmen, anderenends am Tragarm angeschlossen ist, wobei die Stellvorrichtung einenends an der Mähwerksvorrichtung, anderenends an den Tragrahmen wahlweise anschließbar ist.

Im folgenden wird die Erfindung anhand von lediglich einen Ausführungsweg darstellenden Zeichnungen näher erläutert. Es zeigen:

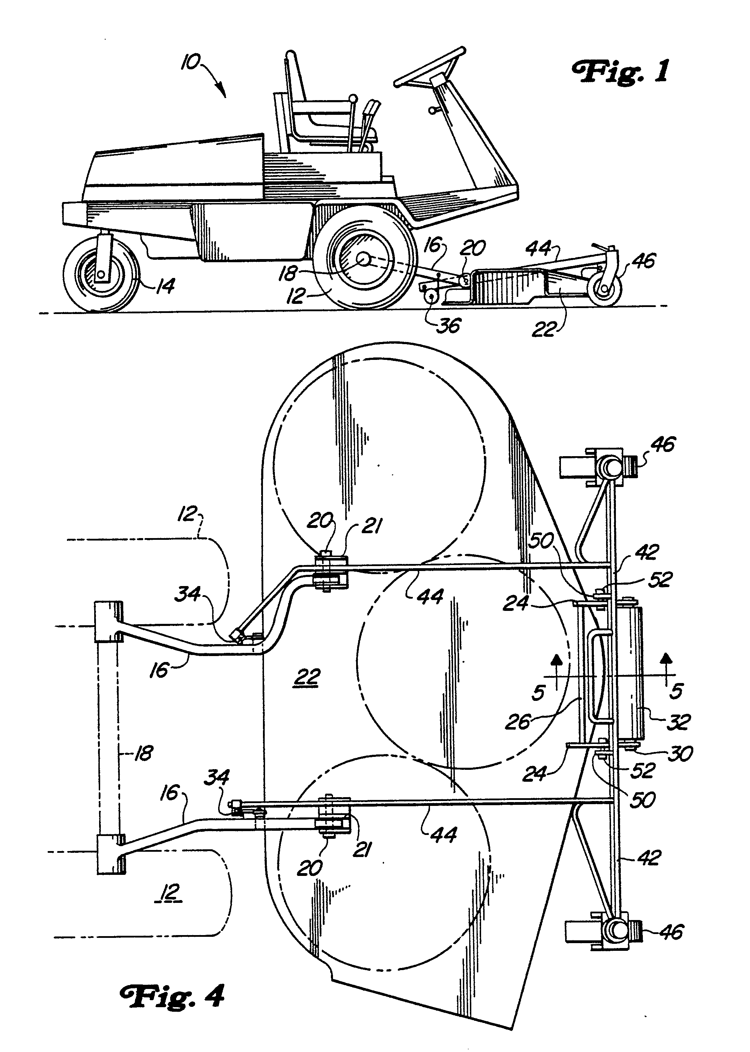

Fig. 1 Einen Gartenschlepper mit einem an der Stirnseite des Gartenschleppers angeordneten Mähwerk,

Fig. 2 eine vergrößerte Darstellung des Mähwerkes gemäß Fig. 1,

Fig. 3 das Mähwerk gemäß Fig. 1 in einer angehobenen Stellung,

Fig. 4 eine Draufsicht des Mähwerkes,

Fig. 5 einen Schnitt entlang der Linie 5-5 gemäß Fig. 4,

Fig. 6 eine vergrößerte perspektivische Darstellung einer Aufhängevorrichtung zwischen dem Tragarm für das Mähwerk und dem Gehäuseteil.

In der Zeichnung ist mit 10 ein Kraftfahrzeug bzw. ein Gar-tenschlepper bezeichnet, der sich auf zwei antreibbaren Laufrädern 12 und einem einzigen hinteren Laufrad 14 abstützt. Zwei sich nach vorne erstreckende, in etwa geneigt verlaufende Tragarme 16 sind mit ihrem jeweiligen Ende an eine Achse 18 zur Aufnahme der Laufräder 12 und mit ihrem anderen Ende an je einer Halterung 34 gelenkig angeschlossen, die auf der Oberseite eines Gehäuses 22 des Mähwerkes angeordnet ist. Der Tragarm 16 dient zur Aufnahme des hinteren Teils des Gehäuses 22. Die Höhenverstellvorrichtung besteht aus einem Tragrahmen 40 und einer Zugseilverbindung zwischen dem Tragarm 16 und den Tragarmen 40.

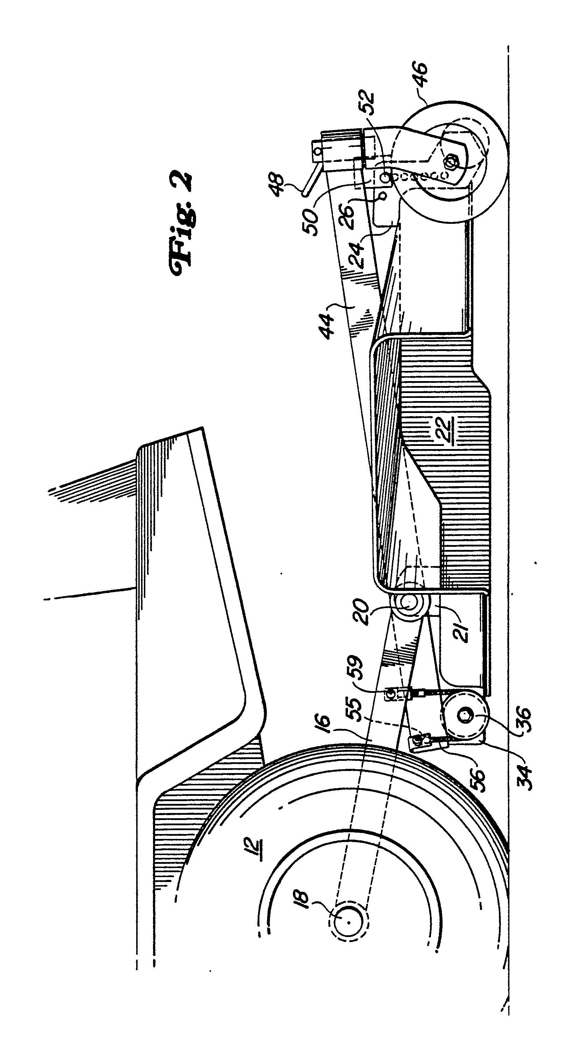

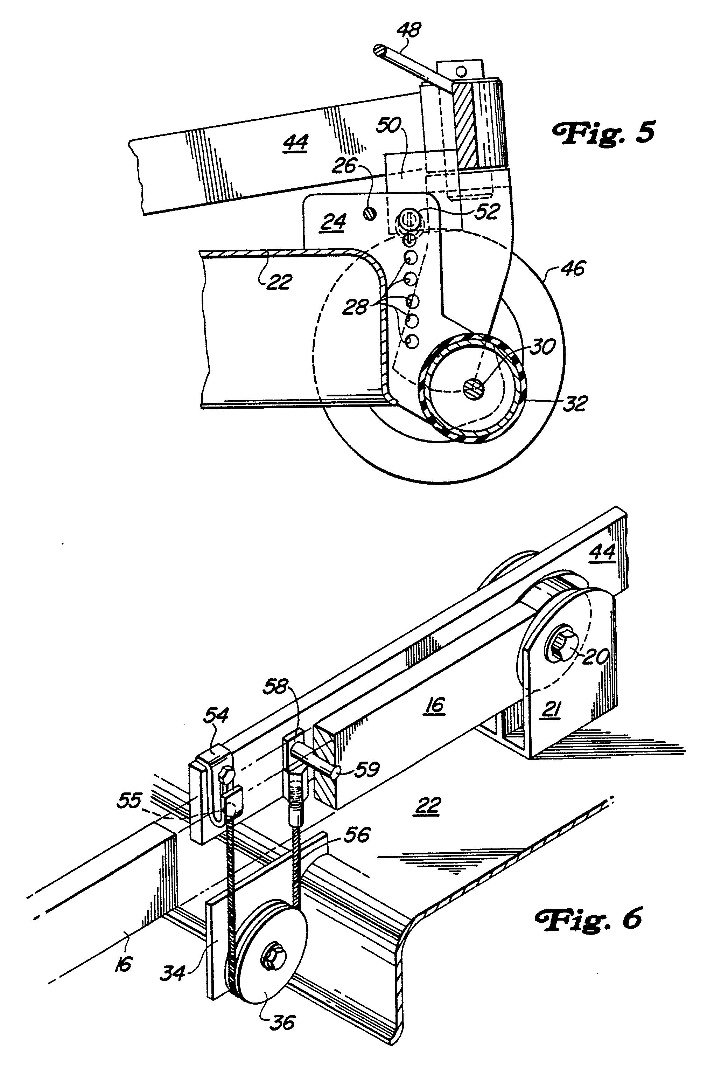

Wie aus den Figuren 4 und 5 hervorgeht, sind an der Stirnseite des Gehäuses 22 zwei mit Abstand zueinander angeordnete Stellplatten 24 angeordnet bzw. angeschweißt. Zwischen den Stellplatten 24 ist eine Stange 26 befestigt, die als Handgriff dient. Eine jede Stellplatte 24 weist sieben vertikal nebeneinander angeordnete Bohrungen 28 auf, die untereinander einen Abstand von 3,8 cm aufweisen können. Die unteren Enden der Stellplatten 24 sind durch eine Achse 30 verbunden, die zur drehbaren Aufnahme einer Rolle 32 dienen. Wie aus den Figuren 2 bis 4 und 6 hervorgeht sind zwei Halterungen 34 an der Rückseite des Gehäuses 22 des Mähwerkes befestigt bzw. angeschweißt. Eine jede Halterung 34 dient zur drehbaren Aufnahme einer Umlenkrolle 36.

Wie aus den Figuren 2 und 4 hervorgeht, weist der Tragrahmen 40 einen Querträger 42 auf, an dem zwei sich in Fahrtrichtung erstreckende Streben 44 angeschlossen sind. Ein jedes Ende des Querträgers 42 trägt ein Laufrad 46 zur Abstützung der Mähwerksvorrichtung. Von dem mittleren Teil des Querträger 42 erstreckt sich ein Handgriff 48 nach hinten. An die Rückseite des Querträgers 42 sind zwei mit Abstand zueinander angeordnete Ösen 50 angeschlossen. deren Öffnungen jeweils so ausgerichtet sind, daß sie mit den einzelnen Bohrungen 28 der Stellplatte 24 in Übereinstimmung gebracht werden können. In die Ösen 50 sowie die entsprechenden Bohrungen 28 können Arretierungsbolzen 52 eingesetzt werden, um auf diese Weise den Tragrahmen 40 in eine der sieben verschiedenen Stellungen zu arretieren und somit die Höhenlage festzulegen. Eine jede Strebe 44 ist an den Gelenkbolzen 20 der Halterung 21 angeschlossen, wobei ein Teil der Strebe über den Gelenkbolzen 20 hinaus verlängert ist und oberhalb der Umlenkrolle 36 endet (s. Fig. 6).

Wie aus Fig. 6 hervorgeht, ist an der Strebe 44 eine geschlitzte Lasche 54 mittels eines Schraubenbolzens 59 an das freie Ende der Strebe 44 angeschlossen und dient zur Aufnahme eines Kopfes eines Kabels 56. An das andere Ende des Kabels 56 ist ein eine Gewindebohrung aufweisendes Befestigungsteil 58 befestigt, das mittels eines Bolzens 59 an den Tragarm 16 angeschlossen ist. In der Bohrung des Befestigungsteils 58 ist ein Gewindeteil des Kabels 56 eingeschraubt. Mittels der Zugseileinrichtung bzw. des Kabels 56 läßt sich eine bestimmte Schnitthöhe für die Mähwerksvorrichtung beibehalten, wobei eine gewiße Feineinstellung mittels des einen Befestigungsteiles 58 möglich ist. Liegt beispielsweise die Schnitthöhe zwischen 2,5 cm und 10 cm, so kann das Gehäuse der Mähwerksvorrichtung automatisch in den drei 2,5 cm-Bereichen verstellt werden, wenn der Abstand zwischen dem Gelenkbolzen 20 und dem Schraubenbolzen 59 einen Betrag von 86,4 % des Abstandes zwischen dem Gelenkbolzen 20 und dem Nippel 55 beträgt.

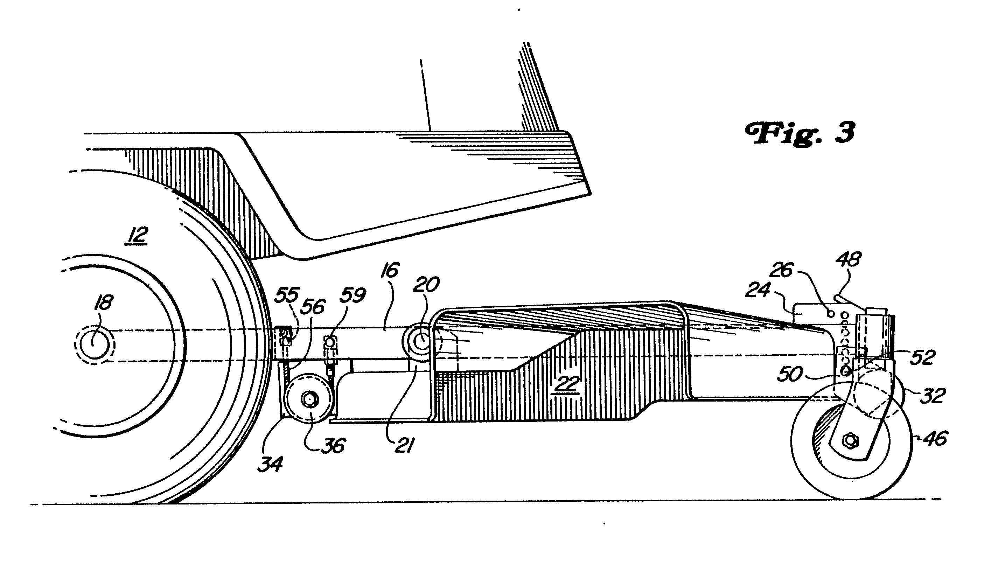

Für den Arbeitseinsatz wird das Gehäuse 22 der Schneidwerksvorrichtung wahlweise auf die gewünschte Höhe eingestellt, wobei gleichzeitig die Stange 26 und der Handgriff 48 erfaßt werden, so daß dadurch der Arretierungsbolzen 52 umgesteckt werden kann. Wird es erwünscht die Schnitthöhe zu erhöhen, so wird die Stange 26 und der Handgriff 48 aufeinanderzubewegt, so daß dadurch der vordere Teil des Gehäuses 22 mit Bezug auf das Laufrad 46 angehoben wird. Danach wird der Arretierungsbolzen 52 in die gewünschte Bohrung 28 eingeführt, um somit die gewünscht Schnitthöhe zu fixieren. Soll beispielsweise die Schnitthöhe vermindert werden, so werden die Stange 26 und der Handgriff 48 ebenfalls erfaßt, so daß dann der Arretierungsbolzen 52 herausgenommen werden kann, so daß dann das Schneidwerk infolge seiner Schwerkraft abgesenkt wird. Die Stange 26 und der Handgriff 48 werden dabei ebenfalls nach unten geführt. Ist die gewünschte Arbeitshöhe erreicht, so kann der Arretierungsbolzen 52 wieder in die entsprechende Bohrung 28 eingeführt werden, so daß dadurch wiederum die Schnitthöhe fixiert ist. Durch die vorteilhafte Anordnung der Zugseilverbindung sowie der einzelnen Bohrungen 28 erhält man somit gemäß den Figuren 2 und 3 eine Parallelverstellung des Gehäuses 22 der Mähwerksvorrichtung.

## Ansprüche

1. Vorrichtung zur Verstellung einer an die Stirnseite eines Schleppers (10) angeschlossenen Mähwerksvorrichtung, die sich über Laufräder (46) auf dem Boden und über gelenkig am Schlepper (l0) angeschlossene Tragarme (16) am Schlepper (10) abstützt, dadurch gekennzeichnet, daß die Mähwerksvorrichtung an einem Tragrahmen (40) gelenkig angeschlossen ist, wobei die Gelenkstelle (20) des Tragrahmens (40) auch die gelenkige Anschlußstelle des Tragarmes (16) an der Mähwerksvorrichtung ist, und daß der Tragrahmen (40) sich mittels seines vorderen Endes über Laufräder (46) auf dem Boden abstützt, wobei der Tragrahmen (40) ferner im vorderen Bereich für unterschiedliche Höheneinstellungen eine Stellvorrichtung (24) aufweist und im hinteren Bereich über eine Zugseilvorrichtung mit der Mähwerksvorrichtung bzw. deren Tragarme (16) verbunden ist.

2. Vorrichtung nach Anspruch 1, dadurch gekennzeichnet, daß die Zugseilvorrichtung eine an der Mähwerksvorrichtung angeordnete Umlenkrolle (36) aufweist, und daß das um die Umlenkrolle (36) geführte Kabel (56) einenends am Tragrahmen (40) anderenends am Tragarm (16) angeschlossen ist, wobei die Stellvorrichtung (24) einenends an der Mähwerksvorrichtung anderenends an den Tragrahmen (40) wahlweise anschließbar ist.

0 245 824

*Fig. 1*

*Fig. 4*

*Fig. 2*

0 245 824

Fig. 3

*Fig. 5*

48

44

50

26

52

24

22

28

46

30

32

*Fig. 6*

44

20

21

58

16

54

59

55

56

16

34

36

22

| | EINSCHLÄGIGE DOKUMENTE | | EP 87106821.9 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
| X | US - A - 4 307 561 (J.E. HICKS) <br> * Ansprüche 1-3; Fig. 2,3 * <br> -- | 1,2 | A 01 D 34/66 <br> A 01 D 34/74 |
| X | US - A - 4 441 306 (J.B. KUHN) <br> * Ansprüche 1-4; Fig. 1 * <br> -- | 1 | |
| A | US - A - 4 320 616 (J.H. MARTO) <br> * Ansprüche 1,2; Fig. 2,3 * <br> -- | 1,2 | |
| A | US - A - 4 187 924 (J.P. DESCHAMPS) <br> * Fig. 1 * <br> -- | 1,2 | |
| A | US - A - 3 702 051 (J. DEINES) <br> * Fig. 1,6 * <br> -- | 1 | RECHERCHIERTE SACHGEBIETE (Int. Cl. 4) <br><br> A 01 D 34/00 |
| A | DE - A1 - 3 343 005 (SIMPLICITY MFG, INC.) <br> ---- | | |

Der vorliegende Recherchenbericht wurde für alle Patentansprüche erstellt.

| Recherchenort <br> WIEN | Abschlußdatum der Recherche <br> 05-08-1987 | Prüfer <br> MENTLER |
|---|---|---|